(19) Europäisches Patentamt / European Patent Office / Office européen des brevets

(11) **EP 4 393 981 A1**

(12) **EUROPEAN PATENT APPLICATION**

(43) Date of publication:
**03.07.2024 Bulletin 2024/27**

(21) Application number: **23219899.4**

(22) Date of filing: **22.12.2023**

(51) International Patent Classification (IPC):
**C08G 73/10** (2006.01)     **B29C 71/02** (2006.01)
**C08J 5/18** (2006.01)

(52) Cooperative Patent Classification (CPC):
**C08G 73/1071; C08G 73/1028; C08J 5/18;**
B29C 71/02; B29C 2071/022

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.12.2022 KR 20220184520**

(71) Applicant: **PI Advanced Materials Co., Ltd.**
**Chungcheongbuk-do 27818 (KR)**

(72) Inventors:
• **Lee, Hosung**
  **27818 Chungcheongbuk-do (KR)**
• **Lee, Ik Sang**
  **27818 Chungcheongbuk-do (KR)**
• **Yang, Minseok**
  **27818 27818 (KR)**

(74) Representative: **Altmann Stößel Dick**
**Patentanwälte PartG mbB**
**Theodor-Heuss-Anlage 2**
**68165 Mannheim (DE)**

(54) **POLYIMIDE MOLDED PRODUCT AND MANUFACTURING METHOD THEREOF**

(57)     Provided is a polyimide molded product comprising polyimide powder obtained by imidizing a dianhydride monomer and a diamine monomer, in which a bidirectional coefficient of thermal expansion ($CTE_{Bi\text{-}direction}$) according to Equation 1 below in the range of 25°C to 300°C is 0.7 to 1.5:

[Equation 1]

Bidirectional coefficient of thermal expansion ($CTE_{Bi\text{-}direction}$) = Transverse coefficient of thermal expansion ($CTE_x$) / Longitudinal coefficient of thermal expansion ($CTE_y$) = $CTE_x$ / $CTE_y$.

EP 4 393 981 A1

**Description**

**CROSS-REFERENCE TO RELATED APPLICATIONS**

This application claims priority under 35 U.S.C. §119 to Korean Patent Application No. 10-2022-0184520, filed on December 26, 2022, in the Korean Intellectual Property Office, the disclosure of which is incorporated herein by reference in its entirety.

**TECHNICAL FIELD**

The following disclosure relates to a polyimide molded product and a manufacturing method thereof, and more specifically, to a polyimide molded product with excellent thermal dimensional stability and a manufacturing method thereof.

**BACKGROUND**

According to the development of advanced technology, high heat-resistant polymer materials such as polyimide, and the like, are essential materials for small size and lightweight, high performance, and high reliability of products, and used in a wide range of industries such as space, aviation, electric/electronic, automobile, precision instruments, and the like, in the form of films, molded articles, fibers, paints, adhesives and composites, and the like. Polyimide has excellent mechanical strength, chemical resistance, weather resistance and heat resistance based on chemical stability of the imide ring. In addition, polyimide has advantages of the ease of synthesis, the possibility of manufacturing into thin films, and not requiring a crosslinking group for curing, and thus it is in the limelight as a high-functional polymer material in various fields from microelectronics to optics, and the like, due to excellent electrical properties.

Recently, in the display field, it has become important to make products lighter and smaller; however, glass substrates currently used have the disadvantage of being heavy, brittle, and difficult to perform continuous processing. For this reason, polyimide substrates having the advantage of being lightweight, flexible, and capable of continuous processing have been manufactured as a substitute for glass substrates, and may also be used even when forming insulating films and protective coating agents for semiconductor devices, surface protection materials and base resins for flexible circuit boards and integrated circuits, and furthermore, interlayer insulating films and protective films for fine circuits. In particular, when used as a coating material, a protective material in which molded bodies such as polyimide films are adhered with an adhesive, or a liquid polyimide resin solution, or the like, may be used.

In a general method for synthesizing polyimide, a polyamic acid, which is a precursor, is first synthesized by a reaction between dianhydride acid and diamine, and then the polyamic acid is imidized. The polyamic acid synthesis is to prepare a polyamic acid by ring-opening and polyaddition reactions between diamine and dianhydride dissolved in a solvent. Here, the reaction solvent used is mainly a polar organic solvent. The synthesized polyamic acid is imidized through dehydration and ring closure reaction through chemical or thermal method to thereby manufacture polyimide.

The chemical imidization method includes adding a chemical dehydrating agent, such as an acid anhydride such as acetic anhydride, and an imidization catalyst, such as tertiary amines such as pyridine, to a polyamic acid solution as a precursor. When the imidization reaction is performed by additionally adding the dehydrating agent or the catalyst as described above, there is a problem in that productivity and process efficiency are low due to the price of the catalyst and the need for an additional process to remove the catalyst.

Meanwhile, the thermal imidization method includes applying a polyamic acid solution as a precursor to a substrate, and evaporating the solvent, followed by heating to 250 to 350°C without a chemical dehydrating agent and a catalyst to perform thermal imidization. However, this method has the disadvantages in that the degree of crystallinity is high and the polymer is decomposed due to an amide exchange reaction occurred when an amide-based solvent is used.

A process of manufacturing a polyimide molded product using polyimide powder manufactured by the above described methods include applying pressure in a single direction (for example, up and down direction), which has a problem in manufacturing high-quality polyimide molded articles since the residual stress generated during this pressing process causes expansion in the direction of heat exposure pressure in a final product.

**SUMMARY**

An embodiment of the present disclosure is directed to providing a polyimide molded product with excellent thermal dimensional stability, heat resistance, and mechanical properties.

In addition, another embodiment of the present disclosure is directed to providing a polyimide molded article obtained from the polyimide molded product.

Further, still another embodiment of the present disclosure is directed to providing a manufacturing method of the polyimide molded product.

Hereinafter, exemplary embodiments of the present disclosure will be described in more detail in the order of "polyimide molded product" and "manufacturing method of polyimide molded product" according to the present disclosure.

Various modifications can be made and various embodiments may be implemented in the present disclosure, and specific embodiments are illustrated in the drawings and described in detail. However, it should be understood that this is not intended to limit the present disclosure to specific embodiments, and comprises all modifications, equivalents, and substitutes included in the spirit and scope of the present disclosure.

Terms used in the present application are only used to describe specific embodiments and are not intended to limit the present disclosure. Singular expressions include plural expressions unless the context clearly indicates otherwise. In the present specification, terms such as "comprise" or "have" are intended to designate the presence of features, numbers, steps, operations, components, parts, or combinations thereof described in the specification and they should not be understood as precluding the possibility of the presence or addition of one or more other features, numbers, steps, operations, components, parts, or combinations thereof.

When amounts, concentrations, or other values or parameters herein are given as ranges, preferred ranges, or lists of upper desirable values and lower desirable values, it should be understood as specifically disclosing all ranges formed by any pair of any upper range limit or preferred value and any lower range limit or preferred value, regardless of whether the scope is separately disclosed.

Where a range of numerical values is recited herein, unless otherwise stated, it is not intended that the range be limited to the endpoints and the scope of the disclosure be limited to the specific values recited when defining a range.

As used herein, "dianhydride" is intended to include precursors or derivatives thereof, which are also referred to as "dianhydride" or "acid dianhydride". These products may not technically be dianhydrides, but may nevertheless react with diamines to form polyamic acids, which may be converted back to polyimides.

"Diamine" as used herein is intended to include precursors or derivatives thereof, which may not technically be diamines, but may nonetheless react with dianhydride acids to form polyamic acids, which may be converted back to polyimides.

Unless defined otherwise, all terms used herein, including technical or scientific terms, have the same meaning as commonly understood by one of ordinary skill in the art to which the embodiments belong. Terms such as those defined in commonly used dictionaries should be interpreted as having a meaning consistent with the meaning in the context of the related art. Unless explicitly defined in the present application, it is not to be construed in an ideal or overly formal sense. Specific details for the implementation of the disclosure will be described below.

The present disclosure provides a polyimide molded product with excellent thermal dimensional stability and a manufacturing method thereof.

In an aspect, the polyimide molded product according to the present disclosure may comprise: a dianhydride monomer and a diamine monomer as polymerized units, the dianhydride monomer including at least one selected from the group consisting of pyromellitic dianhydride (PMDA), 3,3',4,4'-biphenyltetracarboxylic dianhydride (BPDA), 3,3',4,4'-benzophenonetetracarboxylic dianhydride (BTDA), oxydiphthalic dianhydride (ODPA), 4,4'-(hexafluoroisopropylidene)diphthalic anhydride (6FDA), 2,2-bis[(3,4-dicarboxyphenoxy)phenyl]propane dianhydride (BPADA); and the diamine monomer including at least one selected from the group consisting of 4,4'-oxydianiline (ODA), p-phenylenediamine (PPD), 1,3-bis(4-aminophenoxy)benzene (TPE-R), 4,4'-methylenedianiline (MDA), 3,5-diaminobenzoic acid (DABA), 2,2-bis[4-(4-aminophenoxy)phenyl]propane (BAPP), 2,2'-bis(trifluoromethyl)benzidine (TFMB), 2,2-bis[4-(4-aminophenoxy)phenyl]hexafluoropropane (HFBAPP), and m-phenylenediamine (MPD), wherein a bidirectional coefficient of thermal expansion ($CTE_{Bi\text{-}direction}$) according to Equation 1 below in the range of 25°C to 300°C is 0.7 to 1.5:

$$[\text{Equation 1}]$$

$$\text{Bidirectional coefficient of thermal expansion } (CTE_{Bi\text{-}direction}) = \text{Transverse coefficient of thermal expansion } (CTE_x) / \text{Longitudinal coefficient of thermal expansion } (CTE_y) = CTE_x / CTE_y.$$

The bidirectional coefficient of thermal expansion ($CTE_{Bi\text{-}direction}$) represented by Equation 1 above is the ratio ($CTE_x/CTE_y$) of the longitudinal coefficient of thermal expansion ($CTE_y$) to the transverse coefficient of thermal expansion

(CTE$_x$), wherein even if the coefficients of thermal expansion of the polyimide molded product in the longitudinal and transverse directions are small, when the difference between the longitudinal and transverse coefficients of thermal expansion is large, deformation may occur due to the asymmetry of the coefficient of thermal expansion when the molded product receives heat from its surroundings. In this respect, the polyimide molded product according to an embodiment of the present disclosure may have a bidirectional coefficient of thermal expansion of preferably 0.75 to 1.3, more preferably 0.8 to 1.2, even more preferably 0.9 to 1.1, and much more preferably 0.92 to 1.05.

The polyimide molded product may have, in the range of 25°C to 300°C, the transverse coefficient of thermal expansion of 40 to 60 ppm/°C, preferably 45 to 55 ppm/°C, more preferably 48 to 53 ppm/°C, and even more preferably, 49 to 51 ppm/°C, and in an embodiment, the transverse coefficient of thermal expansion thereof may be 49 ppm/°C, 50 ppm/°C, or 51 ppm/°C. The polyimide molded product may have, in the range of 25°C to 300°C, the longitudinal coefficient of thermal expansion of 35 to 65 ppm/°C, preferably 45 to 65 ppm/°C, 48 to 65 ppm/°C, even more preferably 50 to 55 ppm/°C, and in an embodiment, the longitudinal coefficient of thermal expansion thereof may be 50 ppm/°C, 54 ppm/°C, 64 ppm/°C, or 65 ppm/°C. In an exemplary embodiment, the coefficient of thermal expansion was measured using thermo-mechanical analyzer (TMA) according to ASTM D-696.

The polyimide molded product may have a tensile strength of 80 MPa or more, preferably 90 MPa or more, more preferably 95 MPa or more, even more preferably 100 MPa or more, and much more preferably 105 MPa or more, and the upper limit thereof is not particularly limited, but may be 200 MPa or less. In an exemplary embodiment, the tensile strength was measured using a universal testing machine (UTM) according to the ASTM D-1708 standard.

The polyimide molded product may have an elongation of 7% or more, preferably 8% or more, more preferably 8.5% or more, even more preferably 9% or more, and much more preferably 10% or more, and the upper limit thereof is not particularly limited, but may be 40% or less, 30% or less, or 20% or less. In an exemplary embodiment, the elongation was measured using UTM according to the ASTM D1708 standard.

The polyimide molded product may have a modulus of 1.5 GPa or more, preferably 1.7 GPa or more, more preferably 1.9 GPa or more, and even more preferably 2.0 GPa or more. In an exemplary embodiment, the modulus was measured using UTM according to the ASTM D1708 standard.

The polyimide molded product may be applied to a wide range of industrial fields such as space, aviation, electricity/electronics, semiconductors, displays, liquid crystal alignment films, automobiles, precision instruments, packaging, medical materials, separators, fuel cells, and secondary batteries, etc., in various forms such as films, adhesives, tapes, fibers, multilayer films, etc., and may be widely used in any product or field suitable for physical properties and characteristics thereof.

In another aspect, the manufacturing method of a polyimide molded product according to the present disclosure may comprise: (a) preparing polyimide powder; (b) manufacturing a molded product by molding the polyimide powder; and (c) performing post-heat treatment on the molded product to manufacture a post-heat-treated polyimide molded product, wherein the post-heat-treated polyimide molded product has a bidirectional coefficient of thermal expansion (CTE$_{Bi-direction}$) according to Equation 1 below in the range of 25°C to 300°C of 0.7 to 1.5:

```
[Equation 1]

Bidirectional coefficient of thermal expansion (CTEBi-

direction) = Transverse coefficient of thermal expansion (CTEx)

/ Longitudinal coefficient of thermal expansion (CTEy) = CTEx

/ CTEy.
```

In Step (c), the post-heat treatment may be performed at a temperature around the glass transition temperature of polyimide, preferably in a temperature range according to Equation 2 below: wherein the glass transition temperature of the polyimide may be 250°C to 400°C,

[Equation 2]

$$Tg - 100°C < T < Tg + 100°C$$ (T is post-heat treatment temperature, and Tg is the glass transition temperature of polyimide).

The post-heat treatment may be preferably at 200 to 400°C, more preferably at 250 to 400°C, and even more preferably at 300 to 400°C. When the post-heat treatment temperature is lower than 200°C, it is not preferable since it is difficult to remove residual stress, which causes difficulty in controlling bidirectional CTE, and when the post-heat treatment temperature is higher than 400°C, it is not preferable since the physical properties of the polyimide molded product are deteriorated.

In Step (c), the post-heat treatment may be performed for 30 minutes to 180 hours, preferably 1 to 36 hours, more preferably 3 to 30 hours, and even more preferably 6 to 24 hours.

Step (c) may be a step of removing residual stress inside the molded product by performing the post-heat treatment on the molded product.

The polyimide powder may comprise a dianhydride monomer and a diamine monomer as polymerized units.

The dianhydride monomer may comprise at least one selected from the group consisting of pyromellitic dianhydride (PMDA), oxydiphthalic dianhydride (ODPA), 3,3',4,4'-biphenyltetracarboxylic dianhydride (BPDA), 4,4'-(hexafluoroisopropylidene)diphthalic anhydride (6FDA), 2,3,3',4'-biphenyltetracarboxylic dianhydride (a-BPDA), diphenylsulfone-3,4,3',4'-tetracarboxylic dianhydride (DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenonetetracarboxylic dianhydride, 3,3',4,4'-benzophenonetetracarboxylic dianhydride (BTDA), bis(3,4-dicarboxyphenyl)methane dianhydride, 2,2-bis(3,4-dicarboxyphenyl)propane dianhydride, p-phenylenebis(trimellitic monoester acid anhydride), p-biphenylenebis(trimellitic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy)benzene dianhydride, 1,4-bis(3,4-dicarboxyphenoxy)biphenyl dianhydride, 2,2-bis[(3,4-dicarboxyphenoxy)phenyl]propane dianhydride (BPADA), 2,3,6,7-naphthalene tetracarboxylic acid dianhydride, 1,4,5,8-naphthalenetetracarboxylic dianhydride, and 4,4'-(2,2-hexafluoroisopropylidene)diphthalic acid dianhydride, and preferably, may comprise at least one selected from the group consisting of pyromellitic dianhydride (PMDA), 3,3',4,4'-biphenyltetracarboxylic dianhydride (BPDA), 3,3',4,4'-benzophenone tetracarboxylic dianhydride (BTDA), oxydiphthalic dianhydride (ODPA), 4,4'-(hexafluoroisopropylidene)diphthalic anhydride (6FDA), and 2,2-bis[(3,4-dicarboxyphenoxy)phenyl]propane dianhydride (BPADA). The range of dianhydride monomer of the present disclosure is not limited thereto, and dianhydride acids used in manufacturing polyimide may be widely employed.

The diamine monomer may comprise at least one selected from the group consisting of p-phenylenediamine (PPD), m-phenylenediamine (MPD), 4,4'-methylenedianiline (MDA), 2,2'-bis(trifluoromethyl)benzidine (TFMB), 3,3'-dimethylbenzidine, 2,2'-dimethylbenzidine, 2,4-diaminotoluene, 2,6-diaminotoluene, 3,5-diaminobenzoic acid (DABA), 4,4'-oxydianiline (ODA), 4,4'-diaminodiphenyl ether, 3,4-diaminodiphenyl ether, 4,4'-diaminodiphenylmethane(methylenediamine), 3,3'-dimethyl-4,4'-diaminobiphenyl, 2,2'-dimethyl-4,4'-diaminobiphenyl, 2,2'-bis(trifluoromethyl)-4,4'-diaminobiphenyl, 3,3'-dimethyl-4,4'-diaminodiphenyl methane, 3,3'-dicarboxy-4,4'-diaminodiphenylmethane, 3,3',5,5'-tetramethyl-4,4'-diamino diphenylmethane, bis(4-aminophenyl)sulfide, 4,4'-diaminobenzanilide, 3,3'-dimethoxybenzidine, 2,2'-dimethoxybenzidine, 3,3'-diaminodiphenyl ether, 3,4'-diaminodiphenyl ether, 4,4'-diaminodiphenyl ether, 3,3'-diaminodiphenyl sulfide, 3,4'-diaminodiphenyl sulfide, 4,4'-diaminodiphenyl sulfide, 3,3'-diaminodiphenyl sulfone, 3,4'-diaminodiphenyl sulfone, 4,4'-diaminodiphenyl sulfone, 3,3'-diaminobenzophenone, 4,4'-diaminobenzophenone, 3,3'-diamino-4,4'-dichlorobenzophenone, 3,3'-diamino-4,4'-dimethoxybenzophenone, 3,3'-diaminodiphenylmethane, 3,4'-diaminodiphenylmethane, 4,4'-diaminodiphenylmethane, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenyl sulfoxide, 3,4'-diaminodiphenyl sulfoxide, 4,4'-diaminodiphenyl sulfoxide, 1,3-bis(3-aminophenyl)benzene, 1,3-bis(4-aminophenyl)benzene, 1,4-bis(3-aminophenyl)benzene, 1,4-bis(4-aminophenyl)benzene, 1,3-bis(4-aminophenoxy)benzene (TPE-R), 1,4-bis(3-aminophenoxy)benzene (TPE-Q), 1,3-bis(3-aminophenoxy)-4-trifluoromethylbenzene, 3,3'-diamino-4-(4-phenyl)phenoxybenzophenone, 3,3'-diamino-4,4'-di(4-phenylphenoxy)benzophenone, 1,3-bis(3-aminophenyl sulfide)benzene, 1,3-bis(4-aminophenyl sulfide)benzene, 1,4-bis(4-aminophenyl sulfide)benzene, 1,3-bis(3-aminophenyl sulfone)benzene, 1,3-bis(4-aminophenylsulfone)benzene, 1,4-bis(4-aminophenylsulfone)benzene, 1,3-bis[2-(4-aminophenyl)isopropyl]benzene, 1,4-bis[2-(3-aminophenyl)isopropyl]benzene, 1,4-bis[2-(4-aminophenyl)isopropyl]benzene, 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl]ether, bis[3-(4-aminophenoxy)phenyl]ether, bis[4-(3-aminophenoxy)phenyl]ether, bis[4-(4-aminophenoxy)phenyl]ether, bis[3-(3-aminophenoxy)phenyl]ketone, bis[3-(4-aminophenoxy)phenyl]ketone, bis[4-(3-aminophenoxy)phenyl]ketone, bis[4-(4-aminophenoxy)phenyl]ketone, bis[3-(3-aminophenoxy)phenyl]sulfide, bis[3-(4-aminophenoxy)phenyl]sulfide, bis[4-(3-aminophenoxy)phenyl]sulfide, bis[4-(4-aminophenoxy)phenyl]sulfide, bis[3-(3-aminophenoxy)phenyl]sulfone, bis[3-(4-aminophenoxy)phenyl]sulfone, bis[4-(3-aminophenoxy)phenyl]sulfone, bis[4-(4-aminophenoxy)phenyl]sulfone, bis[3-(3-aminophenoxy)phenyl]methane, bis[3-(4-aminophenoxy)phenyl]methane, bis[4-(3-aminophenoxy)phenyl]methane, bis[4-(4-aminophenoxy)phenyl]methane, 2,2-bis[3-(3-aminophenoxy)phenyl]propane, 2,2-bis[3-(4-aminophenoxy)phenyl]propane, 2,2-bis[4-(3-aminophenoxy)phenyl]propane, 2,2-bis[4-(4-aminophenoxy)phenyl]propane (BAPP), 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy)phenyl]-1,1,1,3,3,3-hexafluoropropane, and 2,2-bis[4-(4-aminophenoxy)phenyl]hexafluoropropane (HFBAPP), and preferably, may comprise at least one selected from the group consisting of 4,4'-oxydianiline (ODA), p-phenylenediamine (PPD), 1,3-bis(4-aminophenoxy)benzene (TPE-R), 4,4'-methylenedianiline (MDA), 3,5-diaminobenzoic acid (DABA), 2,2-bis[4-(4-aminophenoxy)phenyl]propane (BAPP), 2,2'-bis(trifluoromethyl)benzidine (TFMB), 2,2-bis[4-(4-aminophenoxy)phenyl]hexafluoropropane (HFBAPP), and m-phenylenediamine (MPD). The range of diamine monomer of the present disclosure is not limited thereto, and diamines used in manufacturing polyimide may be widely employed.

In an exemplary embodiment, it is possible to manufacture polyimide powder by polymerizing pyromellitic dianhydride (PMDA) as a dianhydride monomer and 4,4'-oxydianiline (ODA) as a diamine monomer at 60 to 100°C, followed by powdering the polymerized product through heat treatment at 150°C or higher.

The polyimide powder may have a solid content of 5 to 20% by weight, preferably 10 to 15% by weight.

The dianhydride monomer may have an amount of 90 mol% to 100 mol%, preferably 95 to 100 mol%, and more preferably 100 mol%.

The diamine monomer may have an amount of 90 mol% to 100 mol%, preferably 95 to 100 mol%, and more preferably 100 mol%.

A molar ratio of the dianhydride monomer and the diamine monomer may be 1 : 0.9 to 1 : 1.1, preferably 1 : 0.95 to 1 : 1.05, and more preferably 1 : 1.

The polyimide powder may be any one selected from the group consisting of wholly aromatic polyimide, partially alicyclic polyimide, and wholly alicyclic polyimide.

In Step (b), the molding may be performed by at least one method selected from the group consisting of compression molding, thermocompression molding, injection molding, blow molding, rotational molding, extrusion molding, thermoforming, slush molding, and spin forming.

In addition, the polyimide molded product manufactured by the manufacturing method of the polyimide molded product according to the present disclosure may have excellent thermal dimensional stability and maintain all physical properties such as tensile strength, elongation, and modulus to an excellent degree, thereby being applied to various fields requiring these physical properties.

The manufactured molded product may be applied to a wide range of industrial fields such as space, aviation, electricity/electronics, semiconductors, displays, automobiles, precision instruments, packaging, medical materials, separators, fuel cells, and secondary batteries, in various forms such as films, adhesives, tapes, fibers, multilayer films, etc.

## DETAILED DESCRIPTION OF EMBODIMENTS

The following Examples are presented to facilitate the understanding of the present disclosure. These Examples are only provided to more easily understand the present disclosure, but the content of the present disclosure is not limited by the following Examples.

### <Example>

### Preparation Example 1: Preparation of polyimide powder

A polyamic acid composition was prepared by dispersing pyromellitic dianhydride (PMDA, 100 mol%) which is a dianhydride compound, and 4,4'-oxydianiline (ODA, 100 mol%) which is a diamine compound, in a solvent, N-methylpyrrolidone and co-solvent, naphtha.

The polyamic acid composition was transferred to a 500 mL reaction vessel equipped with a stirrer, a nitrogen injector, and a temperature controller, then the air in the reaction vessel was replaced with nitrogen gas, and the composition was stirred in a high temperature reactor at 180°C for 6 hours to prepare a polyimide powder suspension.

The polyimide powder suspension was filtered under reduced pressure while washing with distilled water to thereby obtain an undried polyimide powder, followed by drying in a vacuum oven at 200°C for 24 hours to obtain polyimide powder.

**[Manufacture of polyimide molded product]**

**Example 1**

The polyimide powder prepared according to Preparation Example 1 was weighed into a mold for evaluating physical properties, respectively, and heated up to 400°C while applying a pressure of 0.5 ton/cm$^2$ or more using a hot press to manufacture a molded product. Then, the molded product was subjected to post-heat treatment in an oven at 300°C for 6 hours to manufacture the final polyimide molded product (width 100 mm, length 100 mm, and thickness 30 $\mu$m).

**Example 2**

A polyimide molded product was manufactured in the same manner as Example 1, except that the post-heat treatment was performed at 350°C for 6 hours instead of post-heat treatment at 300°C for 6 hours.

**Example 3**

A polyimide molded product was manufactured in the same manner as Example 1, except that the post-heat treatment was performed at 400°C for 6 hours instead of post-heat treatment at 300°C for 6 hours.

**Example 4**

A polyimide molded product was manufactured in the same manner as Example 1, except that the post-heat treatment was performed at 400°C for 24 hours instead of post-heat treatment at 300°C for 6 hours.

**Example 5**

A polyimide molded product was manufactured in the same manner as Example 1, except that the post-heat treatment was performed at 200°C for 6 hours instead of post-heat treatment at 300°C for 6 hours.

**Example 6**

A polyimide molded product was manufactured in the same manner as Example 1, except that the post-heat treatment was performed at 250°C for 6 hours instead of post-heat treatment at 300°C for 6 hours.

**Comparative Example 1**

A polyimide molded product was manufactured in the same manner as Example 1, except that the post-heat treatment at 300°C for 6 hours was not performed.

**Comparative Example 2**

A polyimide molded product was manufactured in the same manner as Example 1, except that the post-heat treatment was performed at 450°C for 6 hours instead of post-heat treatment at 300°C for 6 hours.
The post-heat treatment conditions of the polyimide molded products according to Examples 1 to 6 and Comparative Examples 1 and 2 are summarized in Table 1 below.

[Table 1]

| Classification | Units | Example 1 | Example 2 | Example 3 | Example 4 | Example 5 | Example 6 | Comparative Example 1 | Comparative Example 2 |
|---|---|---|---|---|---|---|---|---|---|
| Molding temperature | °C | 400 | 400 | 400 | 400 | 400 | 400 | 400 | 400 |
| Post heat treatment temperature | °C | 300 | 350 | 400 | 400 | 200 | 250 | - | 450 |
| Post heat treatment time | hr | 6 | 6 | 6 | 24 | 6 | 6 | 6 | 6 |

**Experimental Example 1: Analysis of properties of polyimide molded product**

**(1) Tensile strength**

The tensile strength of the polyimide molded products manufactured in Examples and Comparative Examples was measured using a universal testing machine (UTM, Instron 5564, Instron) according to ASTM D1708 standard. Results thereof are shown in Table 2 below.

**(2) Elongation**

The elongation of the polyimide molded products manufactured in Examples and Comparative Examples was measured using UTM (Instron 5564) according to the ASTM D1708 standard. Results thereof are shown in Table 2 below.

**(3) Modulus (elastic modulus)**

The modulus of the polyimide molded products manufactured in Examples and Comparative Examples was measured using the Instron 5564 model according to the ASTM D1708 standard. Results thereof are shown in Table 2 below.

**(4) Coefficient of thermal expansion**

The coefficients of thermal expansion of the polyimide molded products manufactured in Examples and Comparative Examples were measured in the transverse direction (x) and longitudinal direction (y) in the range of 50 to 200°C according to ASTM D-696 using thermo-mechanical analyzer (TMA) . In addition, the bidirectional coefficient of thermal expansion of coefficient ($CTE_x/CTE_y$) was calculated from the transverse coefficient of thermal expansion ($CTE_x$) and longitudinal coefficient of thermal expansion ($CTE_y$). Results thereof are shown in Table 2 below.

The tensile strength, elongation, modulus, and coefficient of thermal expansion of the polyimide molded products according to Examples and Comparative Examples are shown in Table 2 below.

[Table 2]

| Classification | Units | Example 1 | Example 2 | Example 3 | Example 4 | Example 5 | Example 6 | Comparative Example 1 | Comparative Example 2 |
|---|---|---|---|---|---|---|---|---|---|
| Tensile strength | MPa | 111 | 113 | 109 | 107 | 111 | 114 | 114 | 76 |
| Elongation n | % | 11 | 11 | 10 | 10 | 11 | 12 | 11 | 6 |
| Modulus | GPa | 2.2 | 2.1 | 2.2 | 2.2 | 2.1 | 2.2 | 2.2 | 2.5 |
| Transverse coefficient of thermal expansion ($CTE_x$) | ppm/°C | 50 | 51 | 51 | 49 | 50 | 50 | 50 | 49 |
| Longitudinal coefficient of thermal expansion ($CTE_y$) | ppm/°C | 54 | 54 | 50 | 50 | 65 | 64 | 74 | 48 |
| Bidirectional coefficient of thermal expansion ($CTE_x/CTE_y$) | - | 0.93 | 0.94 | 1.02 | 0.98 | 0.77 | 0.78 | 0.68 | 1.02 |

It was confirmed from Table 2 that Examples 1 to 6 in which post-heat treatment was performed did not have a large difference in the transverse coefficient of thermal expansion ($CTE_x$) and longitudinal coefficient of thermal expansion ($CTE_y$) compared to those of Comparative Example 1 in which post-heat treatment was not performed, and the ratio ($CTE_x$ / $CTE_y$) was close to 1. This means that when molding polyimide powder into a molded product, residual stress generated due to pressure applied in the up and down direction (one direction) is removed through post-heat treatment, thereby ensuring heat-resistant dimensional stability.

In addition, it was found that Examples 1 to 6 in which the post-heat treatment was performed in the temperature range of 200 to 400°C had excellent tensile strength, elongation, and modulus compared to those of Comparative Example 2 in which the post-heat treatment was performed at 450°C, and thus it can be appreciated that the post-heat treatment at a high temperature such as 450°C may rather lead to deterioration of the physical properties of the polyimide molded product.

Therefore, it can be understood that the polyimide molded product according to the present disclosure secures heat-resistant dimensional stability while simultaneously exhibiting excellent mechanical properties through the post-heat treatment in an appropriate temperature range.

According to the polyimide molded product of the present disclosure and a manufacturing method thereof, it is possible to remove residual stress inside the molded product through a separate post-heat treatment, thereby manufacturing the polyimide molded product with excellent thermal dimensional stability due to a small degree of thermal expansion in the longitudinal and transverse directions, and the polyimide molded product may also have excellent mechanical properties such as tensile strength, elongation, and modulus.

In the present specification, the detailed description of the contents capable of being sufficiently recognized and inferred by those skilled in the art of the present disclosure are omitted, and many variations and modification can be made within a range that does not change the technical spirit or essential configuration of the present disclosure in addition to the specific exemplary embodiments described in the present specification. Therefore, the present disclosure may also be practiced in a manner different from that specifically described and illustrated herein, which can be understood by those skilled in the art.

**Claims**

1. A polyimide molded product comprising: polyimide powder obtained by imidizing a dianhydride monomer and a diamine monomer,

   the dianhydride monomer including at least one selected from the group consisting of pyromellitic dianhydride (PMDA), 3,3',4,4'-biphenyltetracarboxylic dianhydride (BPDA), 3,3',4,4'-benzophenonetetracarboxylic dianhydride (BTDA), oxydiphthalic dianhydride (ODPA), 4,4'-(hexafluoroisopropylidene)diphthalic anhydride (6FDA), and 2,2-bis[(3,4-dicarboxyphenoxy)phenyl]propane dianhydride (BPADA); and
   the diamine monomer including at least one selected from the group consisting of 4,4'-oxydianiline (ODA), p-phenylenediamine (PPD), 1,3-bis(4-aminophenoxy)benzene (TPE-R), 4,4'-methylenedianiline (MDA), 3,5-diaminobenzoic acid (DABA), 2,2-bis[4-(4-aminophenoxy)phenyl]propane (BAPP), 2,2'-bis(trifluoromethyl)benzidine (TFMB), 2,2-bis[4-(4-aminophenoxy)phenyl]hexafluoropropane (HFBAPP), and m-phenylenediamine (MPD),
   wherein a bidirectional coefficient of thermal expansion ($CTE_{Bi-direction}$) according to Equation 1 below in the range of 25°C to 300°C is 0.7 to 1.5:

   $$[Equation\ 1]$$

   Bidirectional coefficient of thermal expansion ($CTE_{Bi-direction}$) = Transverse coefficient of thermal expansion ($CTE_x$) / Longitudinal coefficient of thermal expansion ($CTE_y$) = $CTE_x$ / $CTE_y$.

2. The polyimide molded product of claim 1, wherein in the range of 25°C to 300°C, the transverse coefficient of thermal expansion is 40 to 60 ppm/°C, and the longitudinal coefficient of thermal expansion is 35 to 65 ppm/°C.

3. The polyimide molded product of claim 1, wherein the polyimide molded product has a tensile strength of 80 MPa or more, an elongation of 7% or more, and a modulus of 1.5 GPa or more.

4. A manufacturing method of a polyimide molded product comprising:

   (a) preparing polyimide powder;
   (b) manufacturing a molded product by molding the polyimide powder; and
   (c) performing post-heat treatment on the molded product to manufacture a post-heat-treated polyimide molded product,
   wherein the post-heat-treated polyimide molded product has a bidirectional coefficient of thermal expansion ($CTE_{Bi\text{-}direction}$) according to Equation 1 below in the range of 25°C to 300°C of 0.7 to 1.5:

$$[\text{Equation 1}]$$

$$\text{Bidirectional coefficient of thermal expansion } (CTE_{Bi\text{-}direction}) = \text{Transverse coefficient of thermal expansion } (CTE_x) / \text{Longitudinal coefficient of thermal expansion } (CTE_y) = CTE_x / CTE_y.$$

5. The manufacturing method of claim 4, wherein the post-heat treatment is performed in a temperature range according to Equation 2 below:

$$[\text{Equation 2}]$$

$$Tg - 100°C < T < Tg + 100°C \text{ (T is post-heat treatment temperature, and Tg is the glass transition temperature of polyimide)}.$$

6. The manufacturing method of claim 4, wherein the post-heat treatment is performed at a temperature of 200 to 400°C.

7. The manufacturing method of claim 4, wherein the post-heat treatment is performed for 30 minutes to 180 hours.

8. The manufacturing method of claim 4, wherein Step (c) is a step of removing residual stress inside the molded product by performing the post-heat treatment on the molded product.

9. The manufacturing method of claim 4, wherein the polyimide powder comprises a dianhydride monomer and a diamine monomer as polymerized units.

10. The manufacturing method of claim 9, wherein the dianhydride monomer comprises at least one selected from the group consisting of pyromellitic dianhydride (PMDA), oxydiphthalic dianhydride (ODPA), 3,3',4,4'-biphenyltetracarboxylic dianhydride (BPDA), 4,4'-(hexafluoroisopropylidene)diphthalic anhydride (6FDA), 2,3,3',4'-biphenyltetracarboxylic dianhydride (a-BPDA), diphenylsulfone-3,4,3',4'-tetracarboxylic dianhydride (DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenonetetracarboxylic dianhydride, 3,3',4,4'-benzophenonetetracarboxylic dianhydride (BTDA), bis(3,4-dicarboxyphenyl)methane dianhydride, 2,2-bis(3,4-dicarboxyphenyl)propane dianhydride, p-phenylenebis(trimellitic monoester acid anhydride), p-biphenylenebis(trimellitic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy)benzene dianhydride, 1,4-bis(3,4-dicarboxyphenoxy)biphenyl dianhydride, 2,2-bis[(3,4-dicarboxyphenoxy)phenyl]propane dianhydride (BPADA), 2,3,6,7-naphthalene tetracarboxylic acid dianhydride, 1,4,5,8-naphthalenetetracarboxylic dianhydride, and 4,4'-(2,2-hexafluoroisopropylidene)diphthalic acid dianhydride.

11. The manufacturing method of claim 9, wherein the dianhydride monomer comprises at least one selected from the group consisting of pyromellitic dianhydride (PMDA), 3,3',4,4'-biphenyltetracarboxylic dianhydride (BPDA), 3,3',4,4'-benzophenone tetracarboxylic dianhydride (BTDA), oxydiphthalic dianhydride (ODPA), 4,4'-(hexafluoroisopropylidene)diphthalic anhydride (6FDA), and 2,2-bis[(3,4-dicarboxyphenoxy)phenyl]propane dianhydride (BPADA).

12. The manufacturing method of claim 9, wherein the diamine monomer comprises at least one selected from the group consisting of p-phenylenediamine (PPD), m-phenylenediamine (MPD), 4,4'-methylenedianiline (MDA), 2,2'-bis(trifluoromethyl)benzidine (TFMB), 3,3'-dimethylbenzidine, 2,2'-dimethylbenzidine, 2,4-diaminotoluene, 2,6-diaminotoluene, 3,5-diaminobenzoic acid (DABA), 4,4'-oxydianiline (ODA), 4,4'-diaminodiphenyl ether, 3,4'-diaminodiphenyl ether, 4,4'-diaminodiphenylmethane(methylenediamine), 3,3'-dimethyl-4,4'-diaminobiphenyl, 2,2'-dimethyl-4,4'-diaminobiphenyl, 2,2'-bis(trifluoromethyl)-4,4'-diaminobiphenyl, 3,3'-dimethyl-4,4'-diaminodiphenyl methane, 3,3'-dicarboxy-4,4'-diaminodiphenylmethane, 3,3',5,5'-tetramethyl-4,4'-diamino diphenylmethane, bis(4-aminophenyl)sulfide, 4,4'-diaminobenzanilide, 3,3'-dimethoxybenzidine, 2,2'-dimethoxybenzidine, 3,3'-diaminodiphenyl ether, 3,4'-diaminodiphenyl ether, 4,4'-diaminodiphenyl ether, 3,3'-diaminodiphenyl sulfide, 3,4'-diaminodiphenyl sulfide, 4,4'-diaminodiphenyl sulfide, 3,3'-diaminodiphenyl sulfone, 3,4'-diaminodiphenyl sulfone, 4,4'-diaminodiphenyl sulfone, 3,3'-diaminobenzophenone, 4,4'-diaminobenzophenone, 3,3'-diamino-4,4'-dichlorobenzophenone, 3,3'-diamino-4,4'-dimethoxybenzophenone, 3,3'-diaminodiphenylmethane, 3,4'-diaminodiphenylmethane, 4,4'-diaminodiphenylmethane, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenyl sulfoxide, 3,4'-diaminodiphenyl sulfoxide, 4,4'-diaminodiphenyl sulfoxide, 1,3-bis(3-aminophenyl)benzene, 1,3-bis(4-aminophenyl)benzene, 1,4-bis(3-aminophenyl)benzene, 1,4-bis(4-aminophenyl)benzene, 1,3-bis(4-aminophenoxy)benzene (TPE-R), 1,4-bis(3-aminophenoxy)benzene (TPE-Q), 1,3-bis(3-aminophenoxy)-4-trifluoromethylbenzene, 3,3'-diamino-4-(4-phenyl)phenoxybenzophenone, 3,3'-diamino-4,4'-di(4-phenylphenoxy)benzophenone, 1,3-bis(3-aminophenyl sulfide)benzene, 1,3-bis(4-aminophenyl sulfide)benzene, 1,4-bis(4-aminophenyl sulfide)benzene, 1,3-bis(3-aminophenyl sulfone)benzene, 1,3-bis(4-aminophenylsulfone)benzene, 1,4-bis(4-aminophenylsulfone)benzene, 1,3-bis[2-(4-aminophenyl)isopropyl]benzene, 1,4-bis[2-(3-aminophenyl)isopropyl]benzene, 1,4-bis[2-(4-aminophenyl)isopropyl]benzene, 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl]ether, bis[3-(4-aminophenoxy)phenyl]ether, bis[4-(3-aminophenoxy)phenyl]ether, bis[4-(4-aminophenoxy)phenyl]ether, bis[3-(3-aminophenoxy)phenyl]ketone, bis[3-(4-aminophenoxy)phenyl]ketone, bis[4-(3-aminophenoxy)phenyl]ketone, bis[4-(4-aminophenoxy)phenyl]ketone, bis[3-(3-aminophenoxy)phenyl]sulfide, bis[3-(4-aminophenoxy)phenyl]sulfide, bis[4-(3-aminophenoxy)phenyl]sulfide, bis[4-(4-aminophenoxy)phenyl]sulfide, bis[3-(3-aminophenoxy)phenyl]sulfone, bis[3-(4-aminophenoxy)phenyl]sulfone, bis[4-(3-aminophenoxy)phenyl]sulfone, bis[4-(4-aminophenoxy)phenyl]sulfone, bis[3-(3-aminophenoxy)phenyl]methane, bis[3-(4-aminophenoxy)phenyl]methane, bis[4-(3-aminophenoxy)phenyl]methane, bis[4-(4-aminophenoxy)phenyl]methane, 2,2-bis[3-(3-aminophenoxy)phenyl]propane, 2,2-bis[3-(4-aminophenoxy)phenyl]propane, 2,2-bis[4-(3-aminophenoxy)phenyl]propane, 2,2-bis[4-(4-aminophenoxy)phenyl]propane (BAPP), 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy)phenyl]-1,1,1,3,3,3-hexafluoropropane, and 2,2-bis[4-(4-aminophenoxy)phenyl]hexafluoropropane (HFBAPP).

13. The manufacturing method of claim 9, wherein the diamine monomer comprises at least one selected from the group consisting of 4,4'-oxydianiline (ODA), p-phenylenediamine (PPD), 1,3-bis(4-aminophenoxy)benzene (TPE-R), 4,4'-methylenedianiline (MDA), 3,5-diaminobenzoic acid (DABA), 2,2-bis[4-(4-aminophenoxy)phenyl]propane (BAPP), 2,2'-bis(trifluoromethyl)benzidine (TFMB), 2,2-bis[4-(4-aminophenoxy)phenyl]hexafluoropropane (HFBAPP), and m-phenylenediamine (MPD).

14. The manufacturing method of claim 4, wherein the polyimide powder is any one selected from the group consisting of wholly aromatic polyimide, partially alicyclic polyimide, and wholly alicyclic polyimide.

15. The manufacturing method of claim 4, wherein in Step (b), the molding is performed by at least one method selected from the group consisting of compression molding, thermocompression molding, injection molding, blow molding, rotational molding, extrusion molding, thermoforming, slush molding, and spin forming.

16. The manufacturing method of claim 4, wherein in the range of 25°C to 300°C, the transverse coefficient of thermal expansion is 40 to 60 ppm/°C, and the longitudinal coefficient of thermal expansion is 35 to 65 ppm/°C.

17. The manufacturing method of claim 4, wherein the polyimide molded product has a tensile strength of 80 MPa or more, an elongation of 7% or more, and a modulus of 1.5 GPa or more.

EP 4 393 981 A1

**EUROPEAN SEARCH REPORT**

Application Number

EP 23 21 9899

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 592 228 A1 (MENICON CO LTD [JP]) 13 April 1994 (1994-04-13) | 1,4-15 | INV. C08G73/10 |
| Y | * claims * * example 1 * * page 8, lines 1-6 * | 3,17 | B29C71/02 C08J5/18 |
| X | WO 2021/101324 A2 (PI ADVANCED MAT CO LTD [KR]) 27 May 2021 (2021-05-27) * claims * * examples * | 1,2,4-16 | |
| Y | EP 0 160 354 A2 (AMOCO CORP [US]) 6 November 1985 (1985-11-06) * page 14 - page 15 * * table III * | 3,17 | |

TECHNICAL FIELDS SEARCHED (IPC)

C08G
B29C
C08J

The present search report has been drawn up for all claims

| Place of search | Date of completion of the search | Examiner |
|---|---|---|
| Munich | 21 May 2024 | Mader, Margarita |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15

**ANNEX TO THE EUROPEAN SEARCH REPORT
ON EUROPEAN PATENT APPLICATION NO.**

EP 23 21 9899

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2024

| Patent document cited in search report | | Publication date | Patent family member(s) | | Publication date |
|---|---|---|---|---|---|
| EP 0592228 | A1 | 13-04-1994 | DE | 69328530 T2 | 11-01-2001 |
| | | | EP | 0592228 A1 | 13-04-1994 |
| | | | JP | 2592575 B2 | 19-03-1997 |
| | | | JP | H06190942 A | 12-07-1994 |
| | | | US | 5397511 A | 14-03-1995 |
| WO 2021101324 | A2 | 27-05-2021 | KR | 20210062902 A | 01-06-2021 |
| | | | US | 2023002613 A1 | 05-01-2023 |
| | | | WO | 2021101324 A2 | 27-05-2021 |
| EP 0160354 | A2 | 06-11-1985 | AT | E67227 T1 | 15-09-1991 |
| | | | CA | 1269782 A | 29-05-1990 |
| | | | EP | 0160354 A2 | 06-11-1985 |
| | | | JP | S60179458 A | 13-09-1985 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220184520